# EUROPÄISCHE PATENTSCHRIFT

(11) **EP 2 979 743 B1**
(45) Veröffentlichungstag und Bekanntmachung des Hinweises auf die Patenterteilung: **09.10.2019**
(21) Anmeldenummer: 14178786.1
(22) Anmeldetag: 28.07.2014
(51) Int. Cl.: B01D 53/22, C01B 3/50, C10L 3/10, E21B 43/16, C25B 1/04

(54) **Vorrichtung und Verfahren zur Speicherung und Verteilung von erneuerbarer Energie**
Device and method for storing and distributing renewable energy
Dispositif et procédé de stockage et distribution d'énergie renouvelable

(43) Veröffentlichungstag der Anmeldung: 03.02.2016
(73) Patentinhaber: RAG Austria AG, 1015 Wien (AT); Axiom Angewandte Prozeßtechnik Ges. m.b.H., 2443 Ebreichsdorf (AT)
(72) Erfinder: Bauer, Stephan, 1190 Wien (AT); Prem, Martin, 3034 Maria Anzbach (AT); Szivacz, Johannes, 2484 Weigelsdorf (AT)
(74) Vertreter: Sonn & Partner Patentanwälte

(56) Entgegenhaltungen:
- WO-A1-2011/144198
- DE-A1-102010 052 260
- US-A1- 2014 030 615
- NATURALHY: "Using the Existing Natural Gas System for Hydrogen", INTERNET CITATION, Oktober 2009 (2009-10), Seiten 1-27, XP002645238, Gefunden im Internet: URL:http://www.naturalhy.net/docs/Naturalh y_Brochure.pdf [gefunden am 2011-06-24]

## Beschreibung

Die vorliegende Erfindung betrifft ein Verfahren zur Speicherung und Verteilung von erneuerbarer Energie, wobei Erdgas mit mittels der erneuerbaren Energie hergestelltem Wasserstoff versetzt, das so erhaltene Erdgas/Wasserstoffgemisch über ein vorzugsweise bereits bestehendes Gasnetz, vorzugsweise ein Erdgasnetz verteilt und der Wasserstoff an einem gewünschten Ort mittels Membrantrennung wieder aus dem Erdgas/Wasserstoffgemisch abgetrennt wird.

Um die tageszeit- bzw. wettersituationsabhängige Verfügbarkeit erneuerbarer Energiequellen, wie Wind und Sonne, auszugleichen und dem Strombedarf anpassen zu können, werden Speicher für die erneuerbaren Energien benötigt. In beispielsweise Starkwindzeiten kann so überschüssig produzierte Energie gespeichert und später, beispielsweise in Zeiten erhöhten Strombedarfs, genutzt werden oder anderen energetischen Gasanwendungen zugeführt werden.

Energiespeicher dienen der Speicherung von Energie zur späteren Nutzung. Ist die Speicherung einer Energieform wegen technischer Probleme, ungenügender Kapazität oder Stillstandsverlusten ungünstig, wird diese Energieform in eine andere, für die Speicherung geeignetere, Energieform umgewandelt und dann gespeichert, wobei im Bedarfsfalle die Energie dann wieder zurückgewandelt werden kann. Ein Beispiel ist die Wandlung chemischer Energie (Brennstoff) in thermische Energie (Wärme) oder die Wandlung von elektrischer Energie (Strom) in chemische Energie (Brennstoff) oder thermische Energie (Wärme). Sowohl bei der Speicherung als auch bei der Energieumwandlung treten immer Verluste auf.

Elektrische Energie kann man nur schwer direkt speichern, meist ist es wirtschaftlicher, die Energie in eine andere Energieart umzuwandeln und bei Bedarf zurückzuwandeln.

Beispielsweise ist in Prenzlau seit 2011 ein Wasserstoff-Hybridkraftwerk im Einsatz, welches durch Windkraft gewonnenen überschüssigen Strom zur Herstellung von Wasserstoff durch Elektrolyse von Wasser nutzt. Die Energie des "Windstroms" wird so in Wasserstoff übergeführt und erst dann wieder freigegeben, wenn der Wasserstoff im angekoppelten Blockheizkraftwerk mit Hilfe von Biogas wieder in CO₂-neutralen Strom umgewandelt wird. Das Biogas wird als dritte Energieform ebenfalls im Prenzlauer Werk produziert.

Alternativ kann der durch Elektrolyse gewonnene Wasserstoff aber auch direkt für den Antrieb von Fahrzeugen dienen, so soll das oben genannte Hybridkraftwerk fünf Tankstellen in Berlin und Hamburg mit "Windgas" beliefern. Auch kann die Abwärme der Blockheizkraftwerke, in denen im Hybridkraftwerk das Biogas mit dem Wasserstoff verbrannt wird, als Fernwärme angeschlossene Gebäude mit Warmwasser für Heizung und den täglichen Bedarf versorgen.

Wasserstoff bildet beim Austreten bei einem Anteil von 4 bis 75 % ein entzündliches Gemisch, ein explosives Gemisch (Knallgas) bildet Wasserstoff erst bei einem Anteil ab 18 %. Weil Wasserstoff das leichteste von allen Elementen ist, verflüchtigt es sich in offener Umgebung, bevor es ein explosives Gemisch bilden kann, oder es brennt in heißen Umgebungen bereits bei der Konzentration von 4 % ab.

Die wohl bekannteste und verbreitetste Speicherform von Wasserstoff ist die so genannte Druckgasspeicherung und basiert auf Druckbehältern, wie beispielsweise Gasflaschen. Die Speicherung erfolgt dabei in geeigneten Behältern unter Drücken von etwa 200 bis 800 bar, bekannt sind auch schon Druckbehälter mit einem Speicherdruck von bis zu 1200 bar. Durch die erforderliche Stabilität der Druckbehälter liegt die Speicherdichte bei etwa 1 kg Wasserstoff in 70-80 kg Behältermasse, was die Druckgasspeicherung für den Transport höchst unökonomisch macht. Weltweit werden daher nur rund 1% des produzierten Wasserstoffs in dieser Form gespeichert und transportiert.

Zusätzlich zur Speicherung ist natürlich auch der Transport von Wasserstoff in Rohrleitungen bei Drücken um 70 bar bekannt, die Chemischen Werke Hüls AG betreiben im Rheinland seit 1938 ein Wasserstoffverbundnetz mit einer Länge von etwa 210 km und 18 angeschlossenen Werken. Bei einem Rohrdurchmesser von 80 cm liegt die Durchflussleistung in diesem Netz bei 1,3 Mio. m³/h.

In der Erdgasindustrie ist die Speicherung von Erdgas in Untertagespeichern Stand der Technik. Verwendung finden hiefür unterirdische ausgesolte Salzkavernen (sogenannte Kavernenspeicher), poröse Gesteinsschichten (sogenannte Porenspeicher), Aquifere und natürliche Hohlräume.

Die Eignung derartige Untertagespeicher für Wasserstoff wurde bereits im Routinebetrieb bei der Speicherung von Stadtgas bestätigt, beispielsweise betreiben die Stadtwerke Kiel seit 1971 eine 32.000 m³ Gaskaverne für die Speicherung von Stadtgas. Die Kaverne liegt in einer Tiefe von 1330 m und die Speicherung erfolgt bei einem Druck von 80-160 bar, wobei die Gasverluste nur bei etwa 1 bis 3 % des Speichervolumens pro Jahr liegen. Wasserstoff lässt sich somit gasförmig im geologischen Untergrund, vorzugsweise in Salzkavernen, speichern, wie es mit Erdgas praktiziert wird.

Bei der Wasserstoffspeicherung im geologischen Untergrund kann gemäß Stand der Technik also auf langjährige praktische Erfahrung zurückgegriffen werden, da vor der Einführung von Erdgas vielfach Stadtgas über Pipelines und unter Einbindung von Untertagespeichern verteilt wurde. Stadtgas besteht zu über 50 % aus Wasserstoff.

Reiner Wasserstoff als Rohstoff für die chemische und petrochemische Industrie wird darüber hinaus seit vielen Jahren auch schon erfolgreich in Salzkavernen sowohl in Teesside (SABIC EUROPE), Großbritannien, und in Texas, USA, gespeichert.

Um die Eignung des bestehenden Erdgasnetzes in Europa für Wasserstoff zu untersuchen, wurde von der EU das Projekt Naturalhy ins Leben gerufen. Die Untersuchung von Mai 2004 bis Oktober 2009 wurde von den großen Gasversorgern fachlich begleitet. Kurz- und mittelfristig meint man, sich auf die Beförderung von zu Erdgasqualität aufbereitetem Biogas einstellen zu müssen, langfristig gesehen soll auch Wasserstoff Zugang zum bestehenden Rohrleitungsnetz finden. Während bisher angenommen wurde, dass eine Beimischung von 5 bis 10 % Wasserstoff zum Erdgas ohne nennenswerte Modifikationen in allen Netzen bewältigt werden kann, ergab das Projekt Naturalhy eine angeblich machbare Beimischungsquote von 25 %. Neuere Studien in Deutschland haben hier differenziert die einzelnen Bauelemente der Erdgasinfrastruktur aber auch Kundenanwendungen untersucht (DVGW Abschlussbericht "Entwicklung von modularen Konzepten zur Erzeugung, Speicherung und Einspeisung von Wasserstoff und Methan ins Erdgasnetz" (G 1/07/10)). Es zeigt sich, dass die Erdgasinfrastruktur weitgehend bereit ist, Wasserstoff aufzunehmen. Punktuell sind Anpassungsmaßnahmen vorzunehmen. Auch GERG, the European Gas Research Group hat sich im Rahmen des Projektes HIPS mit der Wasserstoffverträglichkeit der Erdgasinfrastruktur befasst. Die derzeit noch bestehenden Bedenken auszuräumen, so auch die Wasserstoffverträglichkeit von Untertagespeichern, ist Gegenstand von intensiven Forschungsbemühungen.

Die Beimischung von Wasserstoff zu Erdgas unterliegt der Erdgasnorm, welche zurzeit dezentral in verschiedenen Ländern verschiedene Konzentrationen an Wasserstoff zulässt. In Österreich definiert beispielsweise die ÖVGW-Richtlinie G31 einen Wasserstoffanteil von maximal 4 % in jedem Teil des Erdgasnetzes, befindet sich in der Nähe des Einspeisepunktes eine Erdgas-Tankstelle, so darf der Wasserstoffanteil nur maximal 2 % betragen. In Deutschland sind laut Arbeitsblatt DVGW-G 260 "Gasbeschaffenheit" zur Zeit 5 % Wasserstoff im Erdgasnetz zulässig. Wenn nicht anders angegeben beziehen sich alle Prozentangaben in der vorliegenden Beschreibung bzw. den Patentansprüchen auf Volumenprozent.

Nach wie vor stellt die massive Einspeisung von Ökostrom aus den geplanten Windenergieparks in Nord- und Ostsee ein ungelöstes Problem dar, dem man bereits durch Herstellung von Wasserstoff per Elektrolyse und anschließende Speicherung des hergestellten Wasserstoffs in unterirdischen Salzkavernen beizukommen versucht. Eine zentrale Rückverstromung ohne Ausnutzung der wertvollen Abwärme wäre Verschwendung, so dass es für den produzierten Wasserstoff eigentlich nur zwei Verwendungsoptionen geben kann, nämlich die Zumischung zu dem per Pipeline an der Küste ankommenden Erdgas, oder die Umstellung des Gasnetzes auf reinen Wasserstoff. Je nach Wasserstoffanteil werden im Gasnetz jedenfalls verschiedene Modifikationen der Transport- und Verteilernetze notwendig, das betrifft auch die Einstellungen an technischen Systemen für die Erzeugung von Prozesswärme, die Gaszähler, Brennerdüsen usw. bei den Endkunden. Eine Umstellung des Gasnetzes kann deshalb immer nur als Gesamtsystem erfolgen, Beimischungen von Wasserstoff im Netz müssten so erfolgen, dass stets eine annähernd gleich bleibende Qualität des Energieträgers Gas (z.B. Brennwert, Wobbe Index) gewährleistet ist.

Die vorliegende Erfindung betrifft nun ein Verfahren zur Speicherung und Verteilung von erneuerbarer Energie gemäß Anspruch 1. Die Herstellung des Wasserstoffs unter Verwendung erneuerbarer Energie kann dabei auch direkt beim Speicher durch Elektrolyse erfolgen, wonach der so hergestellte Wasserstoff dem Speicher zugeführt und mit dem Erdgas bzw. bereits vorhandenen Erdgas/Wasserstoffgemisch vermischt wird. Wie bereits ausgeführt sehen die gesetzlichen Vorschriften in Österreich zurzeit eine maximale Wasserstoffkonzentration im Erdgas von 4 % vor, während in Deutschland beispielsweise 5 % zulässig sind. Die erfindungsgemäß vorgesehene Konzentration an Wasserstoff in dem zum Einspeisen in das Erdgasnetz vorgesehenen Gasgemisch beträgt daher in Abhängigkeit von den gesetzlichen Vorschriften des jeweiligen Lands unter 30 %, vorzugsweise unter 25 %, 24 %, 23 %, 22 %, 21 %, 20 %, 19 %, 18%, 17%, 16%, 15%, 14%, 13%, 12 %, 11 %, 10 %, 9 %, 8 %, 7%, 6%, 5 %, 4 %, 3 % bzw. unter 2 %. Erst durch das erfindungsgemäße Verfahren in Zusammenhang mit den verwendeten Speichern kann eine Vergleichmäßigung der fluktuierend anfallenden erneuerbaren Energie in Form von Wasserstoff im Erdgasnetz erzielt werden und können damit erst größere Mengen an erneuerbarer Energie in Form von Wasserstoff in der bestehenden Infrastruktur untergebracht werden.

Beim erfindungsgemäßen Verfahren erfolgt der Transport von Wasserstoff vorzugsweise im bereits bestehenden Erdgasnetz in einer den gesetzlichen Vorschriften entsprechenden Zumischung zum Erdgas, die Lagerung des Erdgas/Wasserstoffgemisches erfolgt vorzugsweise in unterirdischen Lagerstätten, beispielsweise in Kavernen- und/oder Porenspeicher. Nach der Entnahme des Gasgemisches aus der Lagerstätte und vor der Einspeisung in das Erdgasnetz wird dann das Gasgemisch einer Membrantrennung unterzogen, durch welche das Gasgemisch in Erdgas mit einem Wasserstoffgehalt entsprechend den gesetzlichen Vorschriften zum Einspeisen in das Erdgasnetz bzw. gewünschtenfalls in reines Erdgas einerseits und einem Erdgas/Wasserstoffgemisch mit einem Wasserstoffgehalt von etwa 50 % zur Rückführung in den Speicher andererseits aufgetrennt wird. Durch diese Auftrennung wird der Wasserstoffgehalt des in das Netz eingespeisten Erdgas auf einem gewünschten Wert eingestellt, welcher beispielsweise einem weiteren, stromabwärts gelegenen Wasserstoffproduzenten die Möglichkeit einer zusätzlichen Einspeisung von Wasserstoff offen lässt (bis eben die maximal zulässige Konzentration an Wasserstoff erreicht ist) oder aber unter sofortiger Ausnutzung der maximal zulässigen Konzentration den raschen Transport einer großen Menge Wasserstoff über das Erdgasnetz zu einem stromabwärts gelegenen weiteren Speicher ermöglicht.

Das zur Rückführung in den Speicher vorgesehene Erdgas/Wasserstoffgemisch mit einem Wasserstoffgehalt von etwa 50 % kann dabei vorzugsweise auch zumindest teilweise mittels einer permeatseitig von der Membrantrennanlage vorgesehenen geeigneten Verwertungseinheit, wie beispielsweise einem Gasmotor mit angeschlossenem Generator oder einer Brennstoffzelle zur Verstromung verwendet werden, wobei der dadurch gewonnene Strom beispielsweise zum Betrieb eines Kompressors oder Verdichters zur Rückführung des Erdgas/Wasserstoffgemisches in den Speicher dienen kann.

Zwischen Gasnetz und Speicher kann zusätzlich ein Bypass zur Umgehung der Membrantrennanlage vorgesehen werden, so dass bei einem Wasserstoffgehalt im Speicher entsprechend den gesetzlichen Vorschriften für eine Einspeisung ins Netz eine solche Einspeisung direkt, unter Auslassung der Membrantrennanlage, vom Speicher ins Netz erfolgen kann.

Erfindungsgemäß vorgesehen ist auch eine Vorrichtung zur Durchführung des obigen Verfahrens, wobei ein Speicher 4 über Leitungen 2, 3 mit einer Gasleitung 1 in Verbindung steht und gegebenenfalls mittels eines in der Leitung 3 Verdichters bzw. Kompressors 13 befüllt werden kann, und der Speicher 4 zur Entnahme über eine Leitung 5 mit der Gasleitung 1 verbunden ist, dadurch gekennzeichnet, dass in der Leitung 5 eine Membrantrennanlage 6 vorgesehen ist, wobei das Retentat der Membrantrennanlage 6 über die Leitung 5 in die Gasleitung 1 geleitet wird und das Permeat der Membrantrennanlage 6 über die Leitungen 8, 3 in den Speicher 4 rückgeführt wird.

Gemäß einer bevorzugten Ausführungsform der erfindungsgemäßen Vorrichtung sind in den Leitungen 2, 5, 7 und 9 vorzugsweise jeweils Sperrventile 2a, 5a, 7a und 9a vorgesehen.

Gemäß einer weiteren Ausführungsform der erfindungsgemäße Vorrichtung ist in der Leitung 8 eine Ableitung 9 vorgesehen, welche über ein Sperrventil 9a gegebenenfalls geöffnet und/oder geschlossen werden kann, und in eine Verwertungseinheit 10 führt, in welcher das als Permeat aus der Membrantrennanlage 6 austretende Erdgas/Wasserstoffgemisch mit einem Wasserstoffgehalt von etwa 50 % verwertet, beispielsweise verbrannt oder verstromt wird.

Weiters ist günstig, wenn bei der erfindungsgemäßen Vorrichtung in der Leitung 5 ein Wärmetauscher vorgesehen ist, der mit Abwärme der Verwertungseinheit 10 betrieben wird. Die vorliegende Erfindung wird nun unter Bezugnahme auf die beiliegende Zeichnung näher erläutert, auf welche sie jedoch nicht beschränkt sein soll.

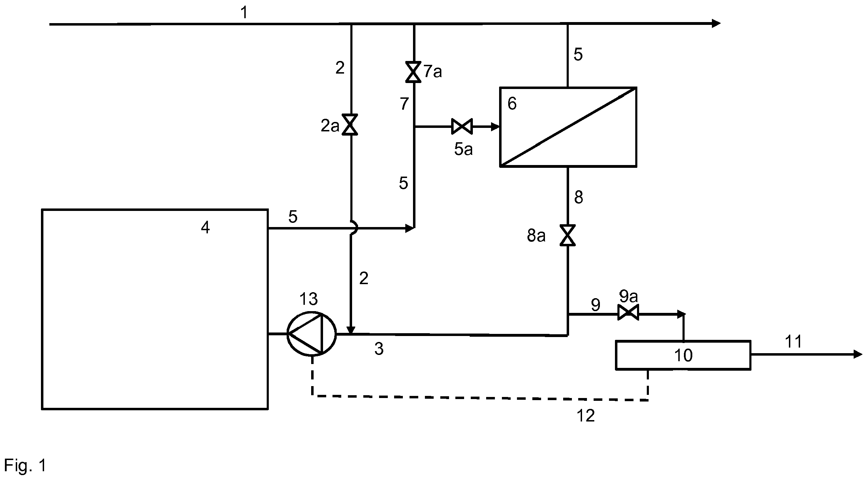

In Figur 1 wird eine Gasleitung 1 gezeigt, welche beispielsweise eine Hauptleitung eines bestehenden Erdgasnetzes sein kann. In dieser Gasleitung 1 wird ein Wasserstoff/Erdgasgemisch entsprechend den gesetzlichen Vorschriften, in Österreich beispielsweise enthaltend maximal 4 % Wasserstoff, transportiert. Über eine Ableitung 2, welche über ein Sperrventil 2a gegebenenfalls geöffnet und/oder geschlossen werden kann, wird nun zumindest ein Teil dieses Gasgemisches aus der Gasleitung 1 entnommen und über die Leitungen 2 und 3 in einem geeigneten Speicher 4 verbracht. In der Leitung 3 ist ein Verdichter bzw. Kompressor 13 zur Druckbeaufschlagung des Gasgemisches vorgesehen, welcher Verdichter bzw. Kompressor 13 über eine Leitung 12 mit Energie für seinen Betrieb versorgt wird.

Eine nicht erfindungsgemäße Entnahme des Gasgemisches kann dann über die Leitung 5 erfolgen, welche bei geöffnetem Sperrventil 7a und geschlossenem Sperrventil 5a über die Leitung 7 in die Gasleitung 1 zurückführt.

Wenn jedoch der Wasserstoffgehalt des entnommenen Gasgemisches geändert werden soll, erfolgt die erfindungsgemäße Entnahme über die Leitung 5 bei geschlossenem Sperrventil 7a und geöffnetem Sperrventil 5a über eine Membrantrennanlage 6, in welcher das Gasgemisch einerseits in Erdgas mit einem Wasserstoffgehalt von beispielsweise unter 4 % oder auch überhaupt keinem Wasserstoffanteil als Retentat zum weiteren Einspeisen über die Leitung 5 in die Erdgasleitung 1 und andererseits einen Erdgas/Wasserstoffgemisch als Permeat mit einem Wasserstoffgehalt von etwa 50 % zur Rückführung über Leitung 8, Sperrventil 8a und Leitung 3 in den Speicher 4 aufgetrennt wird. Das rückgeführte Gasgemisch kann dabei vor Eintritt in den Speicher 4 auch über den Verdichter bzw. Kompressor 13 druckbeaufschlagt werden.

Zur Energiegewinnung bzw. zur Stromversorgung des Verdichters bzw. Kompressors 13 ist in der Leitung 8 eine Ableitung 9 vorgesehen, welche über ein Sperrventil 9a gegebenenfalls geöffnet und/oder geschlossen werden kann, und in eine Verwertungseinheit 10 führt, in welcher das als Permeat aus der Membrantrennanlage 6 austretende Erdgas/Wasserstoffgemisch mit einem Wasserstoffgehalt von etwa 50 % verwertet, beispielsweise verbrannt oder verstromt wird. Die so gewonnene Energie kann dann zumindest teilweise zum Betrieb des Verdichters bzw. Kompressors 13 verwendet werden, überschüssige Energie kann auch zum Erwärmen des über die Leitung 5 aus dem Speicher 4 austretenden Gasgemisches vor Einspeisen desselben in die Erdgasleitung 1 und/oder Einleiten in die Membrantrennanlage 6 dienen. Zu diesem Zweck kann in der Leitung 5 ein Wärmetauscher (in Figur 1 nicht gezeigt) vorgesehen sein, der mit Abwärme der Verwertungseinheit 10 betrieben wird.

## Patentansprüche

1. Verfahren zur Speicherung und Verteilung von erneuerbarer Energie, wobei Erdgas mit mittels der erneuerbaren Energie hergestelltem Wasserstoff versetzt, das so erhaltene Erdgas/Wasserstoffgemisch über ein vorzugsweise bereits bestehendes Gasnetz, vorzugsweise ein Erdgasnetz (1), verteilt und der Wasserstoff an einem gewünschten Ort mittels einer ersten Membrantrennung wieder aus dem Erdgas/Wasserstoffgemisch abgetrennt wird, **dadurch gekennzeichnet, dass** ein aus dem Gasnetz (1) entnommenes Erdgas/Wasserstoffgemisch in einem geeigneten Speicher (4) gelagert wird, wobei im Fall der Entnahme von Erdgas oder einem Erdgas/Wasserstoffgemisch das gelagerte Gasgemisch mittels einer zweiten Membrantrennung (6) in Erdgas mit einem Wasserstoffgehalt entsprechend den gesetzlichen Vorschriften zum Einspeisen in das Erdgasnetz (1) oder reinem Erdgas einerseits und einem Erdgas/Wasserstoffgemisch mit einem Wasserstoffgehalt von etwa 50 % andererseits, welches in den Speicher (4) zurückgeführt wird, aufgetrennt wird.

2. Verfahren nach Anspruch 1, **dadurch gekennzeichnet, dass** die Konzentration an Wasserstoff in dem zum Einspeisen in das Erdgasnetz (1) vorgesehenen Gasgemisch in Abhängigkeit von den gesetzlichen Vorschriften des jeweiligen Lands unter 30 %, vorzugsweise unter 25 %, 24 %, 23 %, 22 %, 21 %, 20 %, 19 %, 18 %, 17 %, 16 %, 15 %, 14 %, 13 %, 12 %, 11 %, 10 %, 9 %, 8 %, 7 %, 6 %, 5 %, 4 %, 3 % bzw. unter 2 % beträgt.

3. Verfahren nach Anspruch 1 oder 2, **dadurch gekennzeichnet, dass** das zur Rückführung in den Speicher (4) vorgesehene Erdgas/Wasserstoffgemisch mit einem Wasserstoffgehalt von etwa 50 % teilweise mittels einer permeatseitig von der zweiten Membrantrennanlage (6) vorgesehenen geeigneten Verwertungseinheit (10) zur Verstromung verwendet wird.

4. Verfahren nach Anspruch 3, **dadurch gekennzeichnet, dass** das zur Rückführung in den Speicher (4) vorgesehene Erdgas/Wasserstoffgemisch, teilweise in einem Gasmotor mit angeschlossenem Generator oder einer Brennstoffzelle verstromt wird.

5. Verfahren nach einem der Ansprüche 3 oder 4, **dadurch gekennzeichnet, dass** der gewonnene Strom zum Betrieb eines Kompressors oder Verdichters (13) zur Rückführung des Erdgas/Wasserstoffgemisches in den Speicher (4) dient.

6. Verfahren nach einem der Ansprüche 1 bis 5, **dadurch gekennzeichnet, dass** zwischen Gasnetz (1) und Speicher (4) ein Bypass (7a) zur Umgehung der zweiten Membrantrennanlage (6) vorgesehen ist.

7. Vorrichtung zur Durchführung des Verfahrens nach einem der Ansprüche 1 bis 6, wobei ein Speicher (4) über Leitungen (2, 3) mit einer Gasleitung (1) in Verbindung steht und gegebenenfalls mittels eines in der Leitung (3) angeordneten Verdichters bzw. Kompressors (13) befüllt werden kann, und der Speicher (4) zur Entnahme über eine Leitung (5) mit der Gasleitung (1) verbunden ist, **dadurch gekennzeichnet, dass** in der Leitung (5) eine Membrantrennanlage (6) vorgesehen ist, wobei das Retentat der Membrantrennanlage (6) über die Leitung (5) in die Gasleitung (1) geleitet wird und das Permeat der Membrantrennanlage (6) über Leitungen (8, 3) in den Speicher (4) rückgeführt wird.

8. Vorrichtung nach Anspruch 7, **dadurch gekennzeichnet, dass** in den Leitungen (2), (5), (7) und (9) jeweils Sperrventile (2a), (5a), (7a) und (9a) vorgesehen sind.

9. Vorrichtung nach Anspruch 7 oder 8, **dadurch gekennzeichnet, dass** in der Leitung (8) eine Ableitung (9) vorgesehen, welche über ein Sperrventil (9a) gegebenenfalls geöffnet und/oder geschlossen werden kann, und in eine Verwertungseinheit (10) führt, in welcher das als Permeat aus der Membrantrennanlage (6) austretende Erdgas/Wasserstoffgemisch mit einem Wasserstoffgehalt von etwa 50 % teilweise verwertet, beispielsweise verbrannt oder verstromt wird.

10. Vorrichtung nach Anspruch 9, **dadurch gekennzeichnet, dass** in der Leitung (5) ein Wärmetauscher vorgesehen ist, der mit Abwärme der Verwertungseinheit (10) betrieben wird.

## Claims

1. Method for storing and distributing renewable energy, natural gas being mixed with hydrogen produced by means of renewable energy, the resulting gas/hydrogen mixture being distributed over a preferably already existing gas grid, preferably a natural-gas grid (1), and the hydrogen being separated again from the natural gas/hydrogen mixture at a desired location by means of a first membrane separation means, **characterised in that** a natural gas/hydrogen mixture taken from the gas grid (1) is stored in a suitable reservoir (4),
the stored gas mixture, in the case of removal of natural gas or a natural gas/hydrogen mixture, being separated by means of a second membrane separation means (6) into natural gas having a hydrogen content according to the legal requirements for feeding into the natural-gas grid (1) or pure natural gas on the one hand and a natural gas/hydrogen mixture having a hydrogen content of approximately 50% on the other hand, which mixture is returned into the reservoir (4).

2. Method according to claim 1, **characterised in that**
the concentration of hydrogen in the gas mixture intended to be fed into the natural-gas grid (1) depending on the legal requirements of the particular country is below 30%, preferably below 25%, 24%, 23%, 22%, 21%, 20%, 19%, 18%, 17%, 16%, 15%, 14%, 13%, 12%, 11%, 10%, 9%, 8%, 7%, 6%, 5%, 4%, 3% or below 2%.

3. Method according to either claim 1 or claim 2, **characterised in that**
some of the natural gas/hydrogen mixture having a hydrogen content of approximately 50% and intended for recirculation into the reservoir (4) is used for conversion into electricity by means of a suitable recovery unit (10) provided on the permeate side by the second membrane separation system (6).

4. Method according to claim 3, **characterised in that**
some of the natural gas/hydrogen mixture provided for recirculation into the reservoir (4) is converted into electricity in a gas engine having a connected generator or a fuel cell.

5. Method according to either claim 3 or claim 4, **characterised in that**
the recovered power is used to operate a compressor or fan (13) for recirculating the natural gas/hydrogen mixture into the reservoir (4).

6. Method according to any of claims 1 to 5, **characterised in that**
a bypass (7a) for bypassing the second membrane separation system (6) is provided between the gas grid (1) and the reservoir (4).

7. Device for carrying out the method according to any of claims 1 to 6,
a reservoir (4) being in communication with a gas line (1) via lines (2, 3) and it being optionally possible for said reservoir to be filled by means of a fan or compressor (13) arranged in the line (3), and the reservoir (4) being connected to the gas line (1) for removal via a line (5), **characterised in that** a membrane separation system (6) is provided in the line (5), the retentate of the membrane separation system (6) being conducted into the gas line (1) via the line (5) and the permeate of the membrane separation system (6) being recirculated into the reservoir (4) via lines (8, 3).

8. Device according to claim 7, **characterised in that**
shut-off valves (2a), (5a), (7a) and (9a) are provided in the lines (2), (5), (7) and (9), respectively.

9. Device according to either claim 7 or claim 8, **characterised in that**
a discharge line (9) is provided in the line (8), which discharge line can be optionally opened and/or closed by means of a shut-off valve (9a), and leads into a recovery unit (10) in which some of the natural gas/hydrogen mixture having a hydrogen content of approximately 50% and passing out of the membrane separation system (6) as the permeate is recovered, for example burned or converted into electricity.

10. Device according to claim 9, **characterised in that**
a heat exchanger is provided in the line (5), which heat exchanger is operated using waste heat from the recovery unit (10).

## Revendications

1. Procédé de stockage et distribution d'énergie renouvelable, dans lequel du gaz naturel est mélangé à de l'hydrogène fabriqué au moyen de l'énergie renouvelable, le mélange gaz naturel/hydrogène ainsi obtenu est distribué par le biais d'un réseau de gaz, de préférence un réseau de gaz naturel (1), de préférence préexistant, et l'hydrogène est, dans un endroit souhaité, de nouveau séparé du mélange gaz naturel/hydrogène au moyen d'une première séparation par membrane, **caractérisé en ce qu'**un mélange gaz naturel/hydrogène prélevé à partir du réseau de gaz (1) est stocké dans un réservoir (4) approprié, dans lequel, en cas de prélèvement de gaz naturel ou d'un mélange gaz naturel/hydrogène, le mélange de gaz stocké est séparé au moyen d'une deuxième séparation par membrane (6) en gaz naturel ayant une teneur en hydrogène correspondant aux prescriptions légales en vue de l'injection dans le réseau de gaz naturel (1), ou en gaz naturel pur d'un côté et en un mélange gaz naturel/hydrogène ayant une teneur en hydrogène d'environ 50 % d'un autre côté qui est renvoyé dans le réservoir (4).

2. Procédé selon la revendication 1, **caractérisé en ce que** la concentration en hydrogène dans le mélange de gaz prévu pour l'injection dans le réseau de gaz naturel (1) en fonction des prescriptions légales de chaque pays est inférieure à 30 %, de préférence inférieure à 25 %, 24 %, 23 %, 22 %, 21 %, 20 %, 19 %, 18 %, 17 %, 16 %, 15 %, 14 %, 13 %, 12 %, 11 %, 10 %, 9 %, 8 %, 7 %, 6 %, 5 %, 4 %, 3 % ou respectivement inférieure à 2 %.

3. Procédé selon la revendication 1 ou 2, **caractérisé en ce que** le mélange gaz naturel/hydrogène ayant une teneur en hydrogène d'environ 50 % prévu pour le renvoi dans le réservoir (4) est utilisé pour la production d'électricité partiellement au moyen d'une unité de recyclage (10) appropriée prévue côté perméat de la deuxième installation de séparation par membrane (6).

4. Procédé selon la revendication 3, **caractérisé en ce que** le mélange gaz naturel/hydrogène prévu pour le renvoi dans le réservoir (4) est utilisé partiellement pour la production d'électricité dans un moteur à gaz auquel est raccordé un générateur ou dans une pile à combustible.

5. Procédé selon l'une des revendications 3 ou 4, **caractérisé en ce que** le courant obtenu sert au fonctionnement d'un compresseur ou d'une partie de compresseur (13) pour le renvoi du mélange gaz naturel/hydrogène dans le réservoir (4).

6. Procédé selon l'une des revendications 1 à 5, **caractérisé en ce qu'**un bypass (7a) destiné à contourner la deuxième installation de séparation par membrane (6) est prévu entre le réseau de gaz (1) et le réservoir (4).

7. Dispositif destiné à la réalisation du procédé selon l'une des revendications 1 à 6, dans lequel un réservoir (4) est raccordé à une conduite de gaz (1) par le biais de conduites (2, 3) et peut éventuellement être rempli au moyen d'un compresseur ou respectivement d'une partie de compresseur (13) disposé(e) dans la conduite (3), et le réservoir (4) est raccordé à la conduite de gaz (1) par le biais d'une conduite (5), **caractérisé en ce qu'**une installation de séparation par membrane (6) est prévue dans la conduite (5), dans lequel le rétentat de l'installation de séparation par membrane (6) est conduit dans la conduite de gaz (1) par le biais de la conduite (5), et le perméat de l'installation de séparation par membrane (6) est renvoyé dans le réservoir (4) par le biais de conduites (8, 3).

8. Dispositif selon la revendication 7, **caractérisé en ce que** des vannes d'arrêt (2a), (5a), (7a) et (9a) sont respectivement prévues dans les conduites (2), (5), (7) et (9).

9. Dispositif selon la revendication 7 ou 8, **caractérisé en ce que**, dans la conduite (8), il est prévu une dérivation (9) qui peut éventuellement être ouverte et/ou fermée par le biais d'une vanne d'arrêt (9a) et qui conduit dans une unité de recyclage (10) dans laquelle le mélange gaz naturel/hydrogène ayant une teneur en hydrogène d'environ 50 % sortant de l'installation de séparation par membrane (6) en tant que perméat est recyclé partiellement, par exemple brûlé ou converti en électricité.

10. Dispositif selon la revendication 9, **caractérisé en ce que**, dans la conduite (5), il est prévu un échangeur de chaleur qui est mis en fonctionnement avec la chaleur dissipée de l'unité de recyclage (10).
